# EUROPEAN PATENT SPECIFICATION

(11) **EP 3 429 128 B1**
(45) Date of publication and mention of the grant of the patent: **06.04.2022**
(21) Application number: 17904359.1
(22) Date of filing: 15.05.2017
(51) Int. Cl.: H04L 12/24, H04L 12/46

(54) **HARD DRIVE OPERATION METHOD AND HARD DRIVE MANAGER**
FESTPLATTENBETRIEBSVERFAHREN UND FESTPLATTENMANAGER
PROCÉDÉ DE FONCTIONNEMENT DE DISQUE DUR ET GESTIONNAIRE DE DISQUE DUR

(43) Date of publication of application: 16.01.2019
(73) Proprietor: xFusion Digital Technologies Co., Ltd., Zhengzhou, Henan 450000 (CN)
(72) Inventor: LI, Hong, Shenzhen Guangdong 518129 (CN); YE, Zheng, Shenzhen Guangdong 518129 (CN)
(74) Representative: Körber, Martin Hans
(86) International application number: PCT/CN2017/084372
(87) International publication number: WO 2018/209513

(56) References cited:
- WO-A1-2015/016882
- CN-A- 104 202 197
- CN-A- 106 648 440
- CN-U- 204 046 631
- US-A1- 2015 121 028
- US-A1- 2017 102 952
- Hermann Strass: "An Introduction to NVMe.", , 9 June 2016 (2016-06-09), pages 1-8, XP055435532, Retrieved from the Internet: URL:https://www.seagate.com/files/www-cont ent/product-content/ssd-fam/nvme-ssd/nytro -xf1440-ssd/_shared/docs/an-introduction-t o-nvme-tp690-1-1605us.pdf [retrieved on 2017-12-15]

## Description

### TECHNICAL FIELD

Embodiments of the present invention relate to the computer field, and in particular, to a hard disk operation method and a hard disk manager.

### BACKGROUND

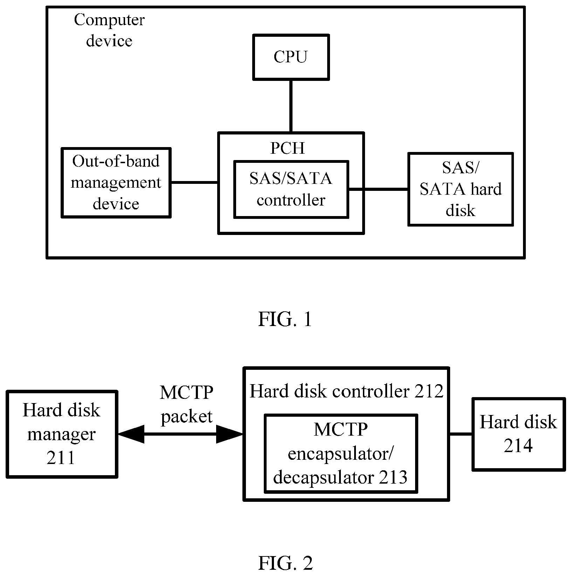

Referring to FIG. 1, in a computer device (for example, a server), the computer device has a central processing unit (English: central processing unit, CPU). The CPU runs an operating system (English: operating system, OS). The computer device further has a platform controller hub (English: Platform Controller Hub, PCH). On the PCH, a SAS (English: serial attached SCSI, serial attached small computer system interface) controller and/or a SATA (English: serial ATA, serial advanced technology attachment) controller are deployed. The SAS/SATA controller in FIG. 1 refers to the SAS controller or the SATA controller. A SAS/SATA hard disk in FIG. 1 refers to a SAS hard disk or a SATA hard disk. The SAS controller supports operations on the SAS hard disk or the SATA hard disk. The SATA/SATA controller supports operations on the SATA hard disk. For the computer device shown in FIG. 1, the OS can identify the SAS/SATA controller, and operate the SAS/SATA hard disk by using an interface provided by the SAS/SATA controller. However, an out-of-band management device (for example, a baseboard management controller (English: Baseboard Management Controller, BMC)) cannot operate the SAS/SATA hard disk.

US 20150121028 A1 discloses that a storage controller 204 inside an IHS 208 is coupled to a remote access controller 206 outside the IHS 208. The remote access controller 206 may communicate a storage device access key to the storage controller 204 directly using MCTP. The storage controller 204 may then use that storage device access key to access any of the storage devices 202a-d.

WO 2015016882 A1 discloses that an IT system 810 remotely transmits MCTP message to a management controller 965 via cellular network 820.

### SUMMARY

In view of this, this application provides a hard disk operation method and a hard disk manager, to operate a hard disk based on the Management Component Transport Protocol (English: Management Component Transport Protocol, MCTP).

The present invention is defined by a hard disk operation method according to claim 1 and a hard disk manager according to claim 3.

Additional features of the invention are provided in the dependent claims. In the following, parts of the description and drawings referring to embodiments which are not covered by the claims are not presented as embodiments of the invention, but as examples useful for understanding the invention.

### BRIEF DESCRIPTION OF DRAWINGS

FIG. 1 is a schematic diagram of a system architecture of a computer device;
FIG. 2 is a schematic diagram of a system architecture of a computer device according to an embodiment of the present invention;
FIG. 3A is a schematic flowchart of a hard disk operation method according to an embodiment of the present invention;
FIG. 3B is a schematic flowchart of a hard disk operation method according to an embodiment of the present invention;
FIG. 4Ais a schematic diagram of a system architecture of a computer device according to an embodiment of the present invention;
FIG. 4B is a schematic diagram of a system architecture of a computer device according to an embodiment of the present invention;
FIG. 4C is a schematic diagram of a system architecture of a computer device according to an embodiment of the present invention; and
FIG. 5 is a schematic diagram of a logical structure of a hard disk manager according to an embodiment of the present invention.

### DESCRIPTION OF EMBODIMENTS

The following describes the technical solutions provided in the embodiments of the present invention with reference to the accompanying drawings in the embodiments of the present invention.

In the embodiments of the present invention, a communication connection established based on the MCTP refers to: Two components of the communication connection can identify each other, and can send an MCTP packet to each other. For example, a hard disk manager and a hard disk controller that establish a communication connection based on the MCTP can identify each other, and can send an MCTP packet to each other.

### COMPUTER DEVICE EMBODIMENT

Referring to FIG. 2, a computer device includes a hard disk manager 211, a hard disk controller 212, and a hard disk 214.

The hard disk 214 is configured to store data. A processor in the computer device (for example, a central processing unit (English: central processing unit (CPU) or an advanced RISC machine (English: Advanced RISC Machine, ARM) processor) may access data in the hard disk 214 by using the hard disk controller 212, for example, read or write data from or into the hard disk 214. FIG. 2 shows one hard disk 214, but the hard disk controller 212 may be connected to a plurality of hard disks 214 at the same time.

Optionally, the hard disk 214 may be a hard disk drive (English: hard disk drive, HDD), a SAS (English: serial attached SCSI, serial attached small computer system interface) hard disk, a SATA (English: serial ATA, serial advanced technology attachment) hard disk, a solid state drive (English: solid state drive, SSD for short), or may be another storage medium configured to store data.

The hard disk 214 is connected to the hard disk controller 212 by using a bus. For example, the hard disk 214 is a SAS hard disk, and the bus may be a bus that supports the SAS protocol. For another example, the hard disk 214 is a SATA hard disk, and the bus may be a bus that supports the SATA protocol.

The hard disk controller 212 may also be referred to as an adapter of the hard disk 214. For example, if the hard disk 214 is an HDD or an SSD, the hard disk controller 212 is a redundant array of independent disks (English: redundant array of independent disks, RAID) controller. For another example, if the hard disk 214 is a SAS hard disk, the hard disk controller 212 is a SAS controller. For another example, if the hard disk 214 is a SATA hard disk, the hard disk controller 212 is a SATA controller.

The hard disk controller 212 may support the Management Component Transport Protocol (English: Management Component Transport Protocol, MCTP), and may further support parsing and encapsulating an MCTP packet.

The hard disk controller 212 includes an MCTP encapsulator/decapsulator 213. The MCTP encapsulator/decapsulator 213 supports parsing out data from an MCTP packet and further supports encapsulating data into an MCTP packet. For example, the MCTP encapsulator/decapsulator 213 may encapsulate an instruction for operating the hard disk 214 into an MCTP packet, and may parse out the instruction from the MCTP packet. For example, the MCTP encapsulator/decapsulator 213 may further encapsulate data that is fed back by the hard disk 214 to the hard disk controller 212 into an MCTP packet. The data may include an execution result that is fed back by the hard disk 214 after the hard disk 214 executes a corresponding action according to the instruction. The MCTP encapsulator/decapsulator 213 may be implemented by using a circuit or a combination of a circuit and software. Optionally, when the MCTP encapsulator/decapsulator 213 is implemented by using a circuit or a combination of a circuit and software, the MCTP encapsulator/decapsulator 213 may be deployed inside the hard disk controller 212 (as shown in FIG. 2), or deployed independently of the hard disk controller 212 (not shown in FIG. 2). If the MCTP encapsulator/decapsulator 213 is independently deployed outside the hard disk controller 212, the hard disk controller 212 has a capability of accessing the MCTP encapsulator/decapsulator 213. For example, the hard disk controller 212 may instruct the MCTP encapsulator/decapsulator 213 to parse out the data from the MCTP packet or encapsulate the data into the MCTP packet.

It should be noted that, regardless of whether the MCTP encapsulator/decapsulator 213 is deployed inside the hard disk controller 212 or independently deployed, the hard disk controller 212 may use the MCTP encapsulator/decapsulator 213 to parse/encapsulate the MCTP packet.

In this embodiment of the present invention, the hard disk controller 212 records an identifier of each hard disk 214. For example, the hard disk 214 registers the identifier of the hard disk 214 with the hard disk controller 212. In this way, the hard disk controller 212 may send, according to the identifier of the hard disk 214 carried in the MCTP packet, the instruction in the MCTP packet to the hard disk 214 specified by the identifier. When the hard disk 214 feeds back data, the hard disk controller 212 may determine, according to the identifier of the hard disk 214, which hard disk 214 feeds back the data.

The hard disk controller 212 and the hard disk manager 211 are directly or indirectly connected by using a bus. A specific type of the bus or a supported protocol is not limited herein. The bus may be any bus that supports establishing a communication connection between the hard disk controller 212 and the hard disk manager 211 based on the MCTP. For example, the bus may be a bus that supports the I2C (English: Inter-Integrated Circuit) protocol or the PCIE (English: Peripheral Component Interconnect Express) protocol. For example, the bus may be a System Management Bus (English: System Management Bus, SMBus).

The hard disk manager 211 may operate the hard disk 214. Specifically, the hard disk manager 211 has a function of processing an MCTP packet, and also has a function of operating the hard disk 214 based on the MCTP, for example, operating the hard disk 214 by using an instruction. In this embodiment of the present invention, for all operations supported by the hard disk 214, the hard disk manager 211 may operate the hard disk 214 by using an instruction regardless of whether the operation is supported by the hard disk controller 212.

The hard disk manager 211 supports the MCTP and has the function of processing an MCTP packet, for example, supports encapsulating data into the MCTP packet, and parsing out data from the MCTP packet. Optionally, the hard disk manager 211 may use an MCTP encapsulator/decapsulator to implement the function of processing an MCTP packet. The MCTP encapsulator/decapsulator may be deployed inside the hard disk manager 211 or deployed independently of the hard disk manager 211. Deploying the MCTP encapsulator/decapsulator used by the hard disk manager 211 is similar to deploying the MCTP encapsulator/decapsulator 213 used by the hard disk controller 212, and details are not described herein.

In a scenario in which the hard disk manager 211 operates the hard disk 214, the hard disk manager 211 generates an instruction, encapsulates the instruction into an MCTP packet, and sends the MCTP packet to the hard disk controller 212. The hard disk controller 212 parses the MCTP packet by using the MCTP encapsulator/decapsulator 213 to obtain the instruction, and forwards the instruction to the hard disk 214. The hard disk 214 executes a corresponding action according to the instruction. In this way, the hard disk manager 211 may operate the hard disk 214 by using the instruction. In addition, the hard disk controller 212 only forwards the instruction and is not required to be capable of identifying the instruction. Therefore, for an action supported by the hard disk 214, the hard disk manager 211 may instruct the hard disk 214 to execute the action regardless of whether the hard disk controller 212 supports the action.

An example is provided to describe that the hard disk manager 211 may instruct the hard disk 214 to execute an action. The action may include any one of the following two types:
first-type action: querying information related to the hard disk 214, for example, querying partition information or fault information of the hard disk 214; instructing the hard disk 214 to perform specified detection; and
second-type action: accessing data stored in the hard disk 214, for example, reading or writing data from or into the hard disk 214.

Optionally, if an out-of-band management device (for example, a baseboard management controller (English: Baseboard Management Controller, BMC)) is used as the hard disk manager 211, the out-of-band management device supports instructing the hard disk 214 to execute the first-type action, but does not support instructing the hard disk 214 to execute the second-type action.

Optionally, if a processor (for example, a CPU or an ARM processor) in the computer device is used as the hard disk manager 211, a function that supports operating the hard disk 214 based on the MCTP is added to the OS running on the processor. For example, the OS running on the processor supports instructing the hard disk 214 to execute the first-type of action and/or the second-type action.

Optionally, the hard disk manager 211 may be implemented by the out-of-band management device, the processor, or another module having an instruction processing function in the computer device. For example, the function of processing the MCTP packet and the function of operating the hard disk 214 based on the MCTP are added to the BMC or the processor to implement the hard disk manager 211.

On a basis of the computer device shown in FIG. 2, an embodiment of the present invention provides a method for operating a hard disk based on the MCTP, and the method is described in detail in the following method embodiment.

### METHOD EMBODIMENT

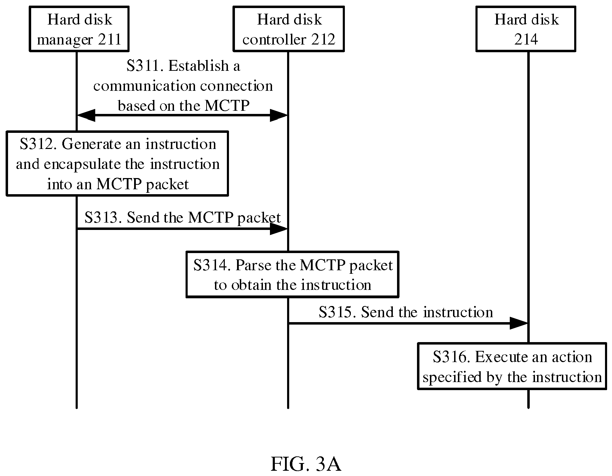

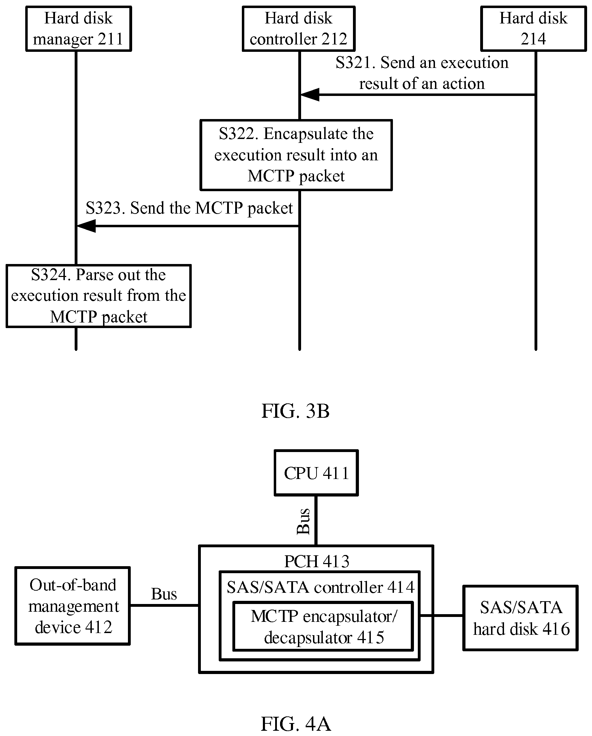

On a basis of the computer device shown in FIG. 2, an embodiment of the present invention provides a method for operating the hard disk 214 based on the MCTP. Referring to FIG. 3, the method includes steps S311, S312, S313, S314, S315, and S316. Step S311: The hard disk manager 211 establishes a communication connection to the hard disk controller 212 based on the MCTP.

Both the hard disk manager 211 and the hard disk controller 212 are deployed in the computer device, and the hard disk manager 211 and the hard disk controller 212 are directly or indirectly connected by using a bus. In this embodiment of the present invention, on a basis of meeting a protocol of the bus, the communication connection between the hard disk manager 211 and the hard disk controller 212 is established by using the MCTP.

A specific implementation of establishing the communication connection by using the MCTP on a basis of meeting the protocol of the bus in this embodiment of the present invention may be using the MCTP to perform a handshake to establish the communication connection between the hard disk manager 211 and the hard disk controller 212.

If the communication connection has been established between the hard disk manager 211 and the hard disk controller 212 based on the MCTP, step S311 in this method is omitted.

If the communication connection is not established between the hard disk manager 211 and the hard disk controller 212 based on the MCTP, step S311 is performed before step S313. It should be noted that step S311 and step S312 are not subject to an execution sequence in this method. For example, step S311 and step S312 may be performed at the same time.

After the hard disk manager 211 establishes the communication connection to the hard disk controller 212 based on the MCTP, the hard disk manager 211 and the hard disk controller 212 can identify each other, and can send MCTP packets to each other. Step S312: The hard disk manager 211 generates an instruction, and encapsulates the instruction into an MCTP packet.

The instruction may be identified by the hard disk 214. The instruction is used to instruct the hard disk 214 to execute a corresponding action, for example, instruct the hard disk 214 to perform a self-check, or read data according to an address carried in the instruction.

When the instruction may be identified by the hard disk 214, a specific format of the instruction is not limited in this embodiment of the present invention. Optionally, the instruction may be a Small Computer System Interface (English: small computer system interface, SCSI) instruction supported by the hard disk 214.

The hard disk manager 211 generates the instruction according to a format that can be identified by the hard disk 214, and encapsulates the instruction into the MCTP packet. Optionally, a quantity of MCTP packets is determined according to a data amount of the instruction. If the quantity is 1, it indicates that only one MCTP packet is enough to carry the instruction. The instruction is directly encapsulated into the MCTP packet, and the MCTP packet forms one MCTP message. If the quantity is N, and N is greater than or equal to 2, it indicates that the instruction needs to be completely carried by using N MCTP packets. The instruction is split into N parts, the N parts are encapsulated into N MCTP packets, and the N MCTP packets form one MCTP message.

It should be noted that methods of encapsulating the instruction into the MCTP packet vary according to formats of the MCTP packet. The formats of the MCTP packet are not limited herein as long as the instruction can be carried in the MCTP packet.

Table 1 illustrates one format of an MCTP packet. The "RSVD" field is a reserved field; the "Header" field indicates a header of the MCTP packet; the "Destination ID" field indicates an identifier of a destination device; the "Source ID" field indicates an identifier of a source device; the "SOM" field indicates whether the current MCTP packet is the first MCTP packet of an MCTP message; the "EOM" field indicates whether the current MCTP packet is the last MCTP packet of the MCTP message; the "seq" field indicates a sequence number of the current MCTP packet in the MCTP message; the "TO" field indicates a tag owner (a device to which a tag belongs); the "Tag" field indicates a tag of the MCTP message; the "IC" field indicates whether to verify integrity of the MCTP message; the "Type" field indicates a type of the MCTP message; the "SCSI Command" field indicates an instruction in the MCTP packet; the "Designed by MCTP" field may be designed by the MCTP in a customized manner.

**Table 1**

| RSVD | | Header | Destination ID | Source ID | SOM | EOM | seq | TO | Tag |
|---|---|---|---|---|---|---|---|---|---|
| IC | Type | | SCSI Command | | | | | | |
| SCSI Command | | | | | | | | | |
| SCSI Command | | | Designed by MCTP | | | | | | |

If the instruction is encapsulated into the MCTP packet in the format shown in Table 1, the "Source ID" field of the MCTP packet records an identifier of the hard disk manager 211, the "Destination ID" field of the MCTP packet records an identifier of the hard disk controller 212, and the "Command" field of the MCTP packet records the instruction.

Step S313: The hard disk manager 211 sends the MCTP packet to the hard disk controller 212.

The MCTP packet carries the instruction generated by the hard disk manager 211. Specifically, the instruction is stored in the "Command" field shown in table 1.

The hard disk manager 211 sends the MCTP packet to the hard disk controller 212 by using the communication connection established based on the MCTP between the hard disk manager 211 and the hard disk controller 212.

Step S314: The hard disk controller 212 parses the MCTP packet to obtain the instruction.

Specifically, the hard disk controller 212 parses the MCTP packet by using the MCTP encapsulator/decapsulator 213, and obtains the instruction from the MCTP packet. For example, the MCTP encapsulator/decapsulator 213 parses the MCTP packet shown in table 1 and obtains the instruction from the "Command" field.

Optionally, the hard disk controller 212 obtains the instruction by using the MCTP encapsulator/decapsulator 213 to parse the MCTP packet, and further obtains an identifier of the hard disk 214 from the instruction.

Step S315: The hard disk controller 212 sends the instruction to the hard disk 214. After obtaining the instruction by parsing the MCTP packet, the hard disk controller 212 may send, according to the identifier of the hard disk 214 carried in the instruction, the instruction to the hard disk 214 specified by the identifier.

Optionally, the hard disk controller 212 is connected to the hard disk 214 by using a bus, and the hard disk controller 212 sends the instruction to the hard disk 214 by using the bus.

Step S316: The hard disk 214 executes an action specified by the instruction.

The hard disk 214 receives the instruction and executes the action specified by the instruction. For example, if the instruction instructs to read data from the hard disk 214, the hard disk reads the data according to the instruction. For example, if the instruction instructs to obtain partition information of the hard disk 214, the hard disk 214 feeds back the partition information to the hard disk controller 212 according to partitioning of the hard disk 214.

The foregoing steps S311, S312, S313, S314, S315, and S316 are used to implement a process in which the hard disk manager 211 instructs, based on the MCTP, the hard disk 214 to execute an action.

In step S316, the hard disk 214 executes the action specified by the instruction. If an execution result is generated after the action is executed, whether to feed back the execution result to the hard disk controller 212 is optional. In addition, if an execution result is not generated after the action is executed, the execution result may not be fed back to the hard disk controller 212, or other related information of the action may be fed back to the hard disk controller 212. For example, the hard disk 214 reads data according to the instruction, and the read data is an execution result. For example, the hard disk 214 obtains the partition information of the hard disk 214 according to the instruction, and the partition information is an execution result. For example, the hard disk 214 is powered off according to the instruction, a power-off execution result may not be generated.

If the hard disk 214 executes the action according to the instruction and generates the execution result, and the hard disk 214 needs to feed back the execution result of the action to the hard disk manager 211, the following steps provided in this method may be performed: steps S321, S322, S323, S324, S325, and S326.

Step S321: The hard disk 214 sends an execution result of the action to the hard disk controller 212.

The hard disk 214 sends the execution result to the hard disk controller 212, and the execution result includes the identifier of the hard disk 214. In this way, the hard disk controller 212 may determine, according to the identifier, which hard disk 214 feeds back the execution result.

In step S321, a process in which the hard disk 214 sends the execution result to the hard disk controller 212 is implemented based on a same principle as a process in which the hard disk controller 212 sends the instruction to the hard disk 214 in step S315. Details are not described herein again, and reference may be made to related descriptions of step S315.

Step S322: The hard disk controller 212 encapsulates the execution result into an MCTP packet.

Specifically, the hard disk controller 212 encapsulates the execution result into the MCTP packet by using the MCTP encapsulator/decapsulator 213. Because the execution result records the identifier of the hard disk 214, the hard disk manager 211 may determine, according to the identifier, which hard disk 214 sends the execution result.

For example, the MCTP encapsulator/decapsulator 213 encapsulates the MCTP packet by using the format shown in table 1. Specifically, the MCTP encapsulator/decapsulator 213 encapsulates the execution result in the "Command" field of the MCTP packet, records the identifier of the hard disk controller 212 in the "Source ID" field of the MCTP packet, and records the identifier of the hard disk manager 211 in the "Destination ID" field of the MCTP packet. In this way, the hard disk controller 212 sends the encapsulated MCTP packet to the hard disk manager 211 according to the identifier of the hard disk manager 211.

In addition, when the MCTP packet is encapsulated, other fields other than the "Command", "Source ID", and "Destination ID" fields are not focused in this embodiment of the present invention. Set the fields by referring to an MCTP-related document. Some fields may be user-defined, for example, the "Designed by MCTP" field in table 1.

Step S323: The hard disk controller 212 sends the MCTP packet to the hard disk manager 211.

The MCTP packet carries the execution result.

The hard disk controller 212 uses the communication connection established based on the MCTP between the hard disk manager 211 and the hard disk controller 212 to send the MCTP packet to the hard disk manager 211. If the communication connection is not established between the hard disk manager 211 and the hard disk controller 212 before step S323 is performed, step S311 needs to be performed before step S323 in this method.

Step S324: The hard disk manager 211 parses out the execution result from the MCTP packet.

Specifically, the hard disk manager 211 parses the MCTP packet to obtain the execution result, and obtains the identifier of the hard disk 214 from the execution result. Then, the hard disk manager 211 may determine, according to the identifier of the hard disk 214, which hard disk 214 sends the execution result.

The hard disk manager 211 has a function of processing the MCTP packet, and can parse the MCTP packet and obtain the execution result from the MCTP packet.

Optionally, the hard disk manager 211 may use an MCTP encapsulator/decapsulator to implement the function of processing the MCTP packet. In this case, an implementation in which the hard disk manager 211 uses the MCTP encapsulator/decapsulator to parse the MCTP packet to obtain the execution result is similar to an implementation in which the hard disk controller 212 uses the MCTP encapsulator/decapsulator 213 to parse the MCTP packet to obtain the instruction. Details are not described herein again, and reference may be made to related descriptions of step S314.

The foregoing steps S321, S322, S323, and S324 are used to implement a process in which the hard disk 214 feeds back, based on the MCTP, the execution result of executing the action according to the instruction to the hard disk manager 211.

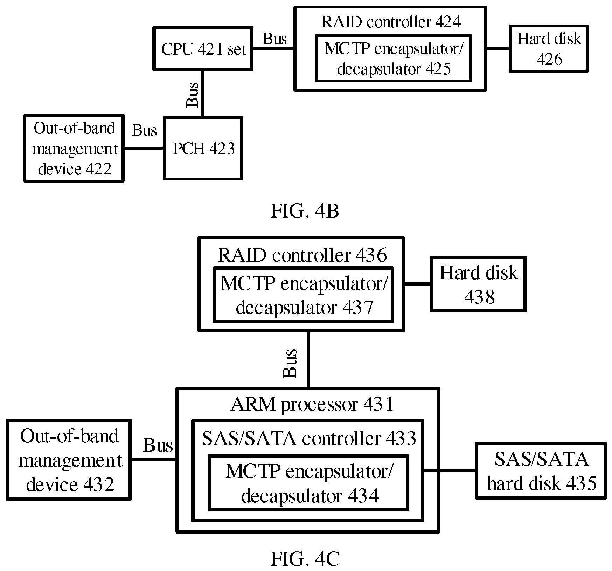

With reference to several specific architectures (as shown in FIG. 4A, FIG. 4B, and FIG. 4C) of the computer device shown in FIG. 2, the following illustrates in detail how to implement the method in the several specific architectures.

FIG. 4A is a specific architecture of the computer device shown in FIG. 2. As shown in FIG. 4A, the computer device includes a central processing unit (English: central processing unit, CPU) set, an out-of-band management device 412, a platform controller hub (English: Platform Controller Hub, PCH) 413, a SAS/SATA controller 414, an MCTP encapsulator/decapsulator 415, and a SAS/SATA hard disk 416. The CPU set includes at least one CPU 411. Some or all CPUs in the at least one CPU 411 are connected to the PCH 413. A CPU connected to the PCH 413 may access the PCH 413.

The SAS/SATA controller 414 corresponds to the hard disk controller 212 in FIG. 2, the MCTP encapsulator/decapsulator 415 corresponds to the MCTP encapsulator/decapsulator 213 in FIG. 2, and the SAS/SATA hard disk 416 corresponds to the hard disk 214 in FIG. 2.

In addition, the SAS/SATA controller 414 may be deployed in or deployed independently of the PCH 413. If the SAS/SATA controller 414 is independently deployed outside the PCH 413, the PCH 413 is capable of accessing the SAS/SATA controller 414, for example, the PCH 413 may forward an MCTP packet to the SAS/SATA controller 414.

In one application scenario, the out-of-band management device 412 is used as the hard disk manager 211 in FIG. 2. Specifically, related functions of the hard disk manager 211 are added to the out-of-band management device 412, for example, a function of operating the SAS/SATA hard disk 416 (including generating an instruction of operating the SAS/SATA hard disk 416) is added. For another example, a function of processing an MCTP packet (including parsing out data from the MCTP packet or encapsulating data into the MCTP packet) is added.

In this application scenario, the out-of-band management device 412 supports instructing the SAS/SATA hard disk 416 to execute a first-type action, for example, instructing the SAS/SATA hard disk 416 to query information related to the SAS/SATA hard disk 416. Therefore, in step S312, the out-of-band management device 412 may generate an instruction that instructs the SAS/SATA hard disk 416 to execute the first-type action. In this way, the out-of-band management device 412 can manage the SAS/SATA hard disk 416.

Optionally, the out-of-band management device 412 does not support instructing the SAS/SATA hard disk 416 to execute a second-type action, for example, to access data stored in the SAS/SATA hard disk 416. Specifically, the out-of-band management device 412 is not allowed to generate, in step S312, an instruction that instructs the SAS/SATA hard disk 416 to execute the second-type action. Alternatively, the out-of-band management device 412 does not have a function of generating an instruction that instructs the SAS/SATA hard disk 416 to execute the second-type action. Therefore, the data stored in the SAS/SATA hard disk 416 may be prevented from being illegally tampered with by using the out-of-band management device 412, and this improves data security.

When the method for operating a hard disk is executed in this application scenario, the following steps in the method may be detailed as follows.

In step S311, the out-of-band management device 412 establishes a communication connection to the SAS/SATA controller 414. Specifically, the out-of-band management device 412 is connected to the PCH 413 by using a bus (for example, a PCIE bus or an SMBus), and the out-of-band management device 412 establishes the communication connection based on the MCTP between the out-of-band management device 412 and the SAS/SATA controller 414 over the bus.

An implementation of establishing a communication connection is exemplified. If a module configured to establish a communication connection based on the MCTP in the PCH 413 is integrated into the SAS/SATA controller 414, the out-of-band management device 412 and the SAS/SATA controller 414 directly establish the communication connection based on the MCTP. Optionally, the PCH 413 stores an identifier of the out-of-band management device 412 and an identifier of the SAS/SATA controller 414. When the out-of-band management device 412 and the SAS/SATA controller 414 are establishing the communication connection, the PCH 413 forwards, according to the identifier of the out-of-band management device 412 and the identifier of the SAS/SATA controller 414 and between the out-of-band management device 412 and the SAS/SATA controller 414, data that is exchanged and required for establishing the communication connection between the out-of-band management device 412 and the SAS/SATA controller 414.

An implementation of establishing a communication connection is exemplified. If the module configured to establish the communication connection based on the MCTP in the PCH 413 is deployed independently of the SAS/SATA controller 414, the method is used to establish the communication connection between the out-of-band management device 412 and the module based on the MCTP. Then, all MCTP packets exchanged between the out-of-band management device 412 and the SAS/SATA controller 414 need to be forwarded by the module in the PCH 413. In this way, the communication connection for exchanging the MCTP packets between the out-of-band management device 412 and the SAS/SATA controller 414 is established by using the module.

In step S313, the out-of-band management device 412 sends an MCTP packet carrying an instruction to the SAS/SATA controller 414 on the communication connection between the out-of-band management device 412 and the SAS/SATA controller 414.

In step S323, the SAS/SATA controller 414 sends an MCTP packet carrying an execution result to the out-of-band management device 412 on the communication connection between the out-of-band management device 412 and the SAS/SATA controller 414.

Implementing the method for operating a hard disk in this application scenario may manage the SAS/SATA hard disk 416 in an out-of-band manner, for example, instruct the SAS/SATA hard disk 416 to query partition information of the SAS/SATA hard disk 41, or to perform fault detection.

In another application scenario, the CPU 411 is used as the hard disk manager 211 in FIG. 2. Specifically, related functions of the hard disk manager 211 are added to an OS running on the CPU 411, for example, a function of operating the SAS/SATA hard disk 416 (including generating an instruction of operating the SAS/SATA hard disk 416) is added, or a function of processing an MCTP packet (including parsing out data from the MCTP packet or encapsulating data into the MCTP packet) is added.

In this application scenario, the OS running on the CPU 411 may support instructing the SAS/SATA hard disk 416 to execute the first-type action. Therefore, in step S312, the CPU 411 may generate an instruction that instructs the SAS/SATA hard disk 416 to execute the first-type action.

In this application scenario, the OS running on the CPU 411 may support instructing the SAS/SATAhard disk 416 to execute the second-type action. Therefore, in step S312, the CPU 411 may generate an instruction that instructs the SAS/SATA hard disk 416 to execute the second-type action.

When the method for operating a hard disk is executed in this application scenario, the following steps in the method may be detailed as follows.

In step S311, the CPU 411 establishes a communication connection to the SAS/SATA controller 414. Specifically, the CPU 411 is connected to the PCH 413 by using a bus (for example, a Direct Media Interface (Direct Media Interface, DMI) bus), and the CPU 411 establishes the communication connection based on the MCTP between the CPU 411 and the SAS/SATA controller 414 over the bus.

An implementation of establishing a communication connection is exemplified. If a module configured to establish a communication connection based on the MCTP in the PCH 413 is integrated into the SAS/SATA controller 414, the CPU 411 and the SAS/SATA controller 414 directly establish the communication connection based on the MCTP. Optionally, when the CPU 411 and the SAS/SATA controller 414 are establishing the communication connection, the PCH 413 forwards data required for establishing the communication connection between the CPU 411 and the SAS/SATA controller 414. Specifically, the PCH 413 stores an identifier of the CPU 411 and the identifier of the SAS/SATA controller 414. The PCH 413 forwards the data between the CPU 411 and the SAS/SATA controller 414 according to the identifier of the CPU 411 and the identifier of the SAS/SATA controller 414.

An implementation of establishing a communication connection is exemplified. If the module configured to establish the communication connection based on the MCTP in the PCH 413 is deployed independently of the SAS/SATA controller 414, the method is used to establish the communication connection between the CPU 411 and the module based on the MCTP. Then, all MCTP packets exchanged between the CPU 411 and the SAS/SATA controller 414 need to be forwarded by the module in the PCH 413. In this way, the communication connection for exchanging the MCTP packets between the CPU 411 and the SAS/SATA controller 414 is established by using the module.

In step S313, the CPU 411 sends an MCTP packet carrying an instruction to the SAS/SATA controller 414 on the communication connection between the CPU 411 and the SAS/SATA controller 414.

In step S323, the SAS/SATA controller 414 sends an MCTP packet carrying an execution result to the CPU 411 on the communication connection between the CPU 411 and the SAS/SATA controller 414.

Implementing the method for operating a hard disk in this application scenario may manage the SAS/SATA hard disk 416 in an in-band manner (specifically by the OS running on the CPU 411), for example, instruct the SAS/SATA hard disk 416 to query the partition information of the SAS/SATA hard disk 416, or instruct the SAS/SATA hard disk 416 to perform fault detection, or the like; the hard disk manager 211 may access the data in the SAS/SATA hard disk 416 based on the MCTP, for example, data is written into the SAS/SATA hard disk 416 by transmitting an MCTP packet, or data is read from the SAS/SATA hard disk 416 by transmitting an MCTP packet.

FIG. 4B is a specific architecture of the computer device shown in FIG. 2. As shown in FIG. 4B, the computer device includes a CPU 421 set, an out-of-band management device 422, a PCH 423, a RAID controller 424, an MCTP encapsulator/decapsulator 425, and a hard disk 426.

The RAID controller 424 corresponds to the hard disk controller 212 in FIG. 2, the MCTP encapsulator/decapsulator 425 corresponds to the MCTP encapsulator/decapsulator 213 in FIG. 2, and the hard disk 426 corresponds to the hard disk 214 in FIG. 2.

The CPU 421 set includes at least one CPU 421. If the CPU 421 set includes a plurality of CPUs 421, the plurality of CPUs 421 are interconnected by using a bus (for example, a Quick Path Interconnect (English: Intel QuickPath Interconnect, QPI) bus). In addition, one or more CPUs 421 in the CPU 421 set is or are connected to the PCH 423 by using a bus (for example, a DMI bus). One or more CPUs 421 in the CPU 421 set is or are connected to the RAID controller 424 by using a bus (for example, a PCIE bus or an SMBus).

Optionally, in the CPU 421 set, there may be a CPU 421 that is connected to both the PCH 423 and the RAID controller 424. Therefore, data that is transmitted between the PCH 423 and the RAID controller 424 based on the MCTP is directly transmitted through the CPU 421.

Optionally, if the CPU 421 set includes the plurality of CPUs 421, and two of the plurality of CPUs 421 are respectively connected to the PCH 423 and the RAID controller 424, data that is transmitted between the PCH 423 and the RAID controller 424 based on the MCTP is transmitted through the two CPUs 421 and a bus between the two CPUs 421.

In one application scenario, the out-of-band management device 422 is used as the hard disk manager 211 in FIG. 2. Specifically, related functions of the hard disk manager 211 are added to the out-of-band management device 412, for example, a function of operating the hard disk 426 is added; for another example, a function of processing an MCTP packet is added.

In this application scenario, the out-of-band management device 422 supports instructing the hard disk 426 to execute a first-type action, for example, instructing the hard disk 426 to query information related to the hard disk 426. Therefore, in step S312, the out-of-band management device 422 may generate an instruction that instructs the hard disk 426 to execute the first-type action.

Optionally, the out-of-band management device 422 does not support instructing the hard disk 426 to execute a second-type action, for example, to access data stored in the hard disk 426. Specifically, the out-of-band management device 422 is not allowed to generate, in step S312, an instruction that instructs the hard disk 426 to execute the second-type action. Alternatively, the out-of-band management device 422 does not have a function of generating an instruction that instructs the hard disk 426 to execute the second-type action. Therefore, the data stored in the SAS/SATA hard disk 426 may be prevented from being illegally tampered with by using the out-of-band management device 422, and this improves data security.

When the method for operating a hard disk is executed in this application scenario, the following steps in the method may be detailed as follows.

In step S311, the out-of-band management device 422 establishes a communication connection to the RAID controller 424 by using the PCH 423 and the CPU 421 set. Specifically, the out-of-band management device 422 and the PCH 423 are connected by using a bus (for example, a PCIE bus or an SMBus), and the out-of-band management device 422 and the PCH 423 establish a communication connection over the bus based on the MCTP. The PCH 423 and the CPU 421 set are connected by using a bus (for example, a DMI bus), and the PCH 423 and the CPU 421 set establish a communication connection over the bus based on the MCTP. The CPU 421 set is connected to the RAID controller 424 by using a bus (for example, a PCIE bus or an SMBus), and the CPU 421 set and the RAID controller 424 establish a communication connection over the bus based on the MCTP. The out-of-band management device 422 establishes a communication connection between the out-of-band management device 422 and the RAID controller 424 based on the communication connection between the out-of-band management device 422 and the PCH 423, the communication connection between the PCH 423 and the CPU 421 set, and the communication connection between the CPU 421 set and the RAID controller 424.

Optionally, when data (for example, data required for establishing the communication connection between the out-of-band management device 422 and the RAID controller 424, or an MCTP packet exchanged between the out-of-band management device 422 and the RAID controller 424) is transmitted by using the CPU 421 set, an OS running on the CPU 421 set does not need to participate in data forwarding, and the data is transmitted only by using an internal circuit in the CPU 421 set or a bus (for example, a QPI bus) between the CPU 421 set.

In step S313, the out-of-band management device 422 sends, by using the PCH 423 and the CPU 421 set, an MCTP packet carrying an instruction to the RAID controller 422 on the communication connection between the out-of-band management device 422 and the RAID controller 424.

In step S323, the RAID controller 424 sends, by using the PCH 423 and the CPU 421 set, an MCTP packet carrying an execution result to the out-of-band management device 422 on the communication connection between the out-of-band management device 422 and the RAID controller 424.

Implementing the method for operating a hard disk in this application scenario may manage the hard disk 426 in an out-of-band manner, for example, instruct the hard disk 426 to query partition information of the hard disk 426, or to perform fault detection.

In another application scenario, the CPU 421 set is used as the hard disk manager 211 in FIG. 2. Specifically, related functions of the hard disk manager 211 are added to the OS running on the CPU 421 set, for example, a function of operating the hard disk 426 is added; for another example, a function of processing an MCTP packet is added.

In this application scenario, the OS running on the CPU 421 set supports instructing the hard disk 426 to execute the first-type action, for example, instructing the hard disk 426 to query the information related to the hard disk 426. Therefore, in step S312, the CPU 421 set may generate the instruction that instructs the hard disk 426 to execute the first-type action.

In this application scenario, the OS running on the CPU 421 set further supports instructing the hard disk 426 to execute the second-type action, for example, to access the data stored in the hard disk 426. Therefore, in step S312, the CPU 421 set may generate the instruction that instructs the hard disk 426 to execute the second-type action.

When the method for operating a hard disk is executed in this application scenario, the following steps in the method may be detailed as follows.

In step S311, the CPU 421 set establishes a communication connection to the RAID controller 424.

Specifically, the CPU 421 set and the PCH 423 are connected by using a bus (for example, a PCIE bus or an SMBus). The CPU 421 set establishes the communication connection between the CPU 421 set and the RAID controller 424 over the bus based on the MCTP.

In step S313, the CPU 421 set sends an MCTP packet carrying an instruction to the RAID controller 424 on the communication connection between the CPU 421 set and the RAID controller 424.

In step S323, the RAID controller 424 sends an MCTP packet carrying an execution result to the CPU 421 set on the communication connection between the CPU 421 set and the RAID controller 424.

Implementing the method for operating a hard disk in this application scenario may manage the hard disk 426 in an in-band manner (specifically by the OS running on the CPU 421 set), for example, instruct the hard disk 426 to query the partition information of the hard disk 426, or instruct the hard disk 426 to perform fault detection, or the like; the out-of-band management device 422 may access the data in the hard disk 426 based on the MCTP, for example, data is written into the hard disk 426 by transmitting an MCTP packet, or data is read from the hard disk 426 by transmitting an MCTP packet. FIG. 4C is a specific architecture of the computer device shown in FIG. 2. As shown in FIG. 4C, the computer device includes an ARM processor 431, an out-of-band management device 432, a SAS/SATA controller 433, an MCTP encapsulator/decapsulator 434, a SAS/SATA hard disk 435, a RAID controller 436, an MCTP encapsulator/decapsulator 437, and a hard disk 438.

The SAS/SATA controller 433 and the RAID controller 436 both correspond to the hard disk controller 212 in FIG. 2. The MCTP encapsulator/decapsulator 434 and the MCTP encapsulator/decapsulator 437 both correspond to the MCTP encapsulator/decapsulator 213 in FIG. 2. The MCTP encapsulator/decapsulator 434 is used by the SAS/SATA controller 433 and the MCTP encapsulator/decapsulator 437 is used by the RAID controller 436. The SAS/SATA hard disk 435 and the hard disk 438 both correspond to the hard disk 214 in FIG. 2.

In addition, the SAS/SATA controller 433 may be deployed in the ARM processor 431 or independently deployed outside the ARM processor 431. If the SAS/SATA controller 433 is independently deployed outside the ARM processor 431, the ARM processor 431 is capable of accessing the SAS/SATA controller 433, for example, the ARM processor 431 instructs the SAS/SATA controller 433 to encapsulate or parse an MCTP packet. In one application scenario, the out-of-band management device 432 is used as the hard disk manager 211 in FIG. 2. Specifically, related functions of the hard disk manager 211 are added to the out-of-band management device 432, for example, a function of operating the SAS/SATA hard disk 435 and the hard disk 438 is added; for another example, a function of processing an MCTP packet is added.

In this application scenario, the out-of-band management device 432 supports instructing the SAS/SATA hard disk 435 and/or the hard disk 438 to execute a first-type action, for example, instructing the SAS/SATA hard disk 435 to query information related to the SAS/SATA hard disk 435. Therefore, in step S312, the out-of-band management device 432 may generate an instruction that instructs the SAS/SATA hard disk 435 and/or the hard disk 438 to execute the first-type action.

Optionally, the out-of-band management device 432 does not support instructing the SAS/SATA hard disk 435 and/or the hard disk 438 to execute a second-type action, for example, to access data stored in the SAS/SATA hard disk 435 and/or the hard disk 438. Specifically, the out-of-band management device 432 is not allowed to generate, in step S312, an instruction that instructs the SAS/SATA hard disk 435 and/or the hard disk 438 to execute the second-type action. Alternatively, the out-of-band management device 432 does not have a function of generating an instruction that instructs the SAS/SATA hard disk 435 and/or the hard disk 438 to execute the second-type action. Therefore, the data stored in the SAS/SATA hard disk 426 may be prevented from being illegally tampered with by using the out-of-band management device 422, and this improves data security.

When the method for operating a hard disk is executed in this application scenario to manage the SAS/SATAhard disk 435, the following steps in the method may be detailed as follows.

In step S311, the out-of-band management device 432 establishes a communication connection to the SAS/SATA controller 433. Specifically, the out-of-band management device 432 is connected to the ARM processor 431 by using a bus (for example, a PCIE bus or an SMBus), and the out-of-band management device 432 establishes the communication connection between the out-of-band management device 432 and the SAS/SATA controller 433 over the bus based on the MCTP.

An implementation of establishing a communication connection is exemplified. If a module configured to establish a communication connection based on the MCTP in the ARM processor 431 is integrated into the SAS/SATA controller 433, the out-of-band management device 432 and the SAS/SATA controller 433 directly establish the communication connection based on the MCTP. Optionally, the ARM processor 431 stores an identifier of the out-of-band management device 432 and an identifier of the SAS/SATA controller 433. When the out-of-band management device 432 and the SAS/SATA controller 433 are establishing the communication connection, the ARM processor 431 forwards, according to the identifier of the out-of-band management device 432 and the identifier of the SAS/SATA controller 433 and between the out-of-band management device 432 and the SAS/SATA controller 433, data that is exchanged and required for establishing the communication connection between the out-of-band management device 432 and the SAS/SATA controller 433.

An implementation of establishing a communication connection is exemplified. If the module configured to establish the communication connection based on the MCTP in the ARM processor 431 is deployed independently of the SAS/SATA controller 433, the method is used to establish the communication connection between the out-of-band management device 432 and the module based on the MCTP. Then, all MCTP packets exchanged between the out-of-band management device 432 and the SAS/SATA controller 433 need to be forwarded by the module in the ARM processor 431. In this way, the communication connection for exchanging the MCTP packets between the out-of-band management device 432 and the SAS/SATA controller 433 is established by using the module.

In step S313, the out-of-band management device 432 sends an MCTP packet carrying an instruction (an instruction that indicates an action of the SAS/SATA hard disk 435) to the SAS/SATA controller 433 on the communication connection between the out-of-band management device 432 and the SAS/SATA controller 433.

In step S323, the SAS/SATA controller 433 sends an MCTP packet carrying an execution result (an execution result of the action executed by the SAS/SATA hard disk 435 according to the instruction) to the out-of-band management device 432 on the communication connection between the out-of-band management device 432 and the SAS/SATA controller 433.

Implementing the method for operating a hard disk in this application scenario may manage the SAS/SATA hard disk 435 in an out-of-band manner, for example, instruct the SAS/SATA hard disk 435 to query partition information of the SAS/SATA hard disk 435, or to perform fault detection.

When the method for operating a hard disk is executed in this application scenario to manage the hard disk 438, the following steps in the method may be detailed as follows. In step S311, the out-of-band management device 432 establishes a communication connection to the RAID controller 436 by using the ARM processor 431.

Specifically, the out-of-band management device 432 is connected to the ARM processor 431 by using a bus, and the out-of-band management device 432 and the ARM processor 431 establish a communication connection over the bus based on the MCTP. The ARM processor 431 is connected to the RAID controller 436 by using a bus, and the ARM processor 431 establishes a communication connection to the RAID controller 436 over the bus based on the MCTP. The out-of-band management device 432 establishes the communication connection between the out-of-band management device 432 and the RAID controller 436 based on the communication connection between the out-of-band management device 432 and the ARM processor 431 and the communication connection between the ARM processor 431 and the RAID controller 436.

Optionally, when data (for example, data required for establishing the communication connection between the out-of-band management device 432 and the RAID controller 436, or an MCTP packet exchanged between the out-of-band management device 432 and the RAID controller 436) is transmitted by using the ARM processor 431, an OS running on the ARM processor 431 does not need to participate in data forwarding, and the data is transmitted only by using an internal circuit in the ARM processor 431.

In step S313, the out-of-band management device 432 sends, by using the ARM processor 431, an MCTP packet carrying an instruction (an instruction that indicates an action of the hard disk 438) to the RAID controller 436 on the communication connection between the out-of-band management device 432 and the RAID controller 436.

In step S323, the RAID controller 436 sends, by using the ARM processor 431, an MCTP packet carrying an execution result (an execution result of the action executed by the hard disk 438 according to the instruction) to the out-of-band management device 432 on the communication connection between the out-of-band management device 432 and the RAID controller 436.

Implementing the method for operating a hard disk in this application scenario may manage the hard disk 438 in an out-of-band manner, for example, instruct the hard disk 438 to query partition information of the hard disk 438, or to perform fault detection.

In another application scenario, the ARM processor 431 is used as the hard disk manager 211 in FIG. 2. Specifically, related functions of the hard disk manager 211 are added to the OS running on the ARM processor 431, for example, a function of operating the hard disk 438 is added; or a function of processing an MCTP packet is added.

In this application scenario, the OS running on the ARM processor 431 may support instructing the hard disk 438 to execute the first-type action. Therefore, in step S312, the ARM processor 431 may generate an instruction that instructs the hard disk 438 to execute the first-type action.

In this application scenario, the OS running on the ARM processor 431 may support instructing the hard disk 438 to execute the second-type action. Therefore, in step S312, the ARM processor 431 may generate an instruction that instructs the hard disk 438 to execute the second-type action.

In this application scenario, when the ARM processor 431 operates the hard disk 438 by using the RAID controller 436, the steps shown in FIG. 3 (including FIG. 3A and FIG. 3b) may be detailed in a similar manner as the steps shown in FIG. 3 (including FIG. 3A and FIG. 3b) when the CPU 421 set operates the hard disk 426 by using the RAID controller 424. Details are not described herein again, and reference may be made to related descriptions of operating the hard disk 426 by the CPU 421 set by using the RAID controller 424.

Implementing the method for operating the hard disk 438 in this application scenario may manage the hard disk 438 in an in-band manner, for example, instruct the hard disk 438 to query the partition information of the hard disk 438, or to perform fault detection; the ARM processor 431 may access the data in the hard disk 438 based on the MCTP, for example, data is written into the hard disk 438 by transmitting an MCTP packet, or data is read from the hard disk 438 by transmitting an MCTP packet.

### HARD DISK MANAGER EMBODIMENT

### Hard disk manager embodiment 1

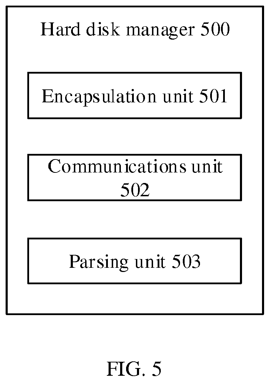

An embodiment of this application provides a hard disk manager. The hard disk manager includes functional units of the method for operating a hard disk provided in the foregoing method embodiment. A division manner of the functional units is not limited herein. FIG. 5 provides functional units included in a hard disk manager 500 by example.

Referring to FIG. 5, the hard disk manager 500 includes:
an encapsulation unit 501, configured to generate an instruction and encapsulate the instruction into a first Management Component Transport Protocol MCTP packet, where the instruction is used to specify a hard disk execution action; and
a communications unit 502, configured to send the first MCTP packet to a hard disk controller, so that the hard disk controller forwards the instruction to a hard disk.

Optionally, the hard disk manager 500 further includes:
the communications unit 502 is configured to receive a second MCTP packet sent by the hard disk controller, wherein the second MCTP packet carries an execution result obtained by the hard disk by executing the action according to the instruction; and
a parsing unit 504, configured to parse out the execution result from the second MCTP packet.

Optionally, the communications unit 502 is configured to establish a communication connection to the hard disk controller based on the MCTP.

Optionally, a computer device includes an out-of-band management device and a PCH. The out-of-band management device is the hard disk manager 500, and the hard disk controller is deployed on the PCH or deployed independently of the PCH.

The communications unit 502 is configured to establish the communication connection to the hard disk controller based on the MCTP by using the PCH.

Optionally, the computer device includes a CPU set and a PCH. The CPU set includes at least one CPU, the CPU set is the hard disk manager 500, and the hard disk controller is deployed on the PCH or deployed independently of the PCH.

The communications unit 502 is configured to establish the communication connection to the hard disk controller based on the MCTP by using the PCH.

Optionally, the computer device includes an out-of-band management device, a PCH, a CPU set, and a redundant array of independent disks RAID controller. The CPU set includes at least one CPU, the out-of-band management device is the hard disk manager 500, and the hard disk controller is the RAID controller.

The communications unit 502 is configured to establish the communication connection to the hard disk controller based on the MCTP by using the PCH and the CPU set.

Optionally, the computer device includes an out-of-band management device and an ARM processor. The out-of-band management device is the hard disk manager 500, and the hard disk controller is deployed on the ARM processor or deployed independently of the ARM processor.

The communications unit 502 is configured to establish the communication connection to the hard disk controller based on the MCTP by using the ARM processor. Optionally, the computer device includes an out-of-band management device, an ARM processor, and a RAID controller. The out-of-band management device is the hard disk manager 500, and the hard disk controller is the RAID controller.

The communications unit 502 is configured to establish the communication connection to the hard disk controller based on the MCTP by using the ARM processor.

### Hard disk manager embodiment 2

An embodiment of this application provides an out-of-band management device. Functional units that implement the method for operating a hard disk in the foregoing method embodiment are deployed in the out-of-band management device.

### Hard disk manager embodiment 3

An embodiment of this application provides a processor (for example, a CPU or an ARM processor). Functional units that implement the method for operating a hard disk in the foregoing method embodiment are deployed in the processor.

### Storage Medium Embodiment

An embodiment of this application provides a computer readable storage medium. An instruction is stored in the computer readable storage medium. When the instruction is run on a hard disk manager, the hard disk manager (for example, an out-of-band management device or a processor) executes the method for operating a hard disk in the foregoing method embodiment.

### Software Product Embodiment

An embodiment of this application provides a computer program product. The computer program product includes an instruction. When the instruction is run on a hard disk manager, the hard disk manager (for example, an out-of-band management device or a processor) executes the method for operating a hard disk in the foregoing method embodiment.

### Computer Device Embodiment

An embodiment of this application provides a computer device. The computer device includes the foregoing hard disk manager.

Optionally, the computer device may be a server.

## Claims

1. A hard disk operation method, wherein the method comprises:
establishing, by a hard disk manager, communication connection to a hard disk controller based on Management Component Transport Protocol, MCTP by using a platform controller hub, PCH, wherein a computer device comprises a CPU set and the PCH, the CPU set comprises at least one CPU running an operating system, OS, the CPU set is the hard disk manager, and the hard disk controller is deployed on the PCH, wherein the hard disk controller is a SAS/SATA controller;
generating, by the hard disk manager, an instruction, and encapsulating the instruction into a first MCTP packet, wherein the instruction is used to specify a hard disk execution action; and
sending, by the hard disk manager, the first MCTP packet to a hard disk controller, so that the hard disk controller forwards the instruction to a hard disk.

2. The method according to claim 1, wherein the method further comprises:
receiving, by the hard disk manager, a second MCTP packet sent by the hard disk controller, wherein the second MCTP packet carries an execution result obtained by the hard disk by executing the action according to the instruction; and
parsing out, by the hard disk manager, the execution result from the second MCTP packet.

3. A hard disk manager (500), wherein the hard disk manager (500) comprises:
A communications unit (502), configured to establish communication connection to a hard disk controller based on Management Component Transport Protocol, MCTP by using a platform controller hub, PCH, wherein a computer device comprises a CPU set and the PCH, the CPU set comprises at least one CPU running an operating system, OS, the CPU set is the hard disk manager, and the hard disk controller is deployed on the PCH, wherein the hard disk controller is a SAS/SATA controller;
an encapsulation unit (501), configured to generate an instruction and encapsulate the instruction into a first MCTP packet, wherein the instruction is used to specify a hard disk execution action;
the communications unit (502), configured to send the first MCTP packet to a hard disk controller, so that the hard disk controller forwards the instruction to a hard disk.

4. The hard disk manager according to claim 3, wherein the hard disk manager comprises:
the communications unit (502) is configured to receive a second MCTP packet sent by the hard disk controller, wherein the second MCTP packet carries an execution result obtained by the hard disk by executing the action according to the instruction;
a parsing unit (503), configured to parse out the execution result from the second MCTP packet.

## Patentansprüche

1. Festplattenbetriebsverfahren, wobei das Verfahren Folgendes umfasst:
Herstellen, durch einen Festplattenmanager, einer Kommunikationsverbindung mit einer Festplattensteuerung basierend auf "Management Component Transport Protocol", MCTP, durch Verwenden eines "Platform Controller Hub", PCH, wobei eine Computervorrichtung einen CPU-Satz und den PCH umfasst, der CPU-Satz mindestens eine CPU, die ein Betriebssystem, OS, ausführt, umfasst, der CPU-Satz der Festplattenmanager ist und die Festplattensteuerung auf dem PCH bereitgestellt ist, wobei die Festplattensteuerung eine SAS/SATA-Steuerung ist;
Erzeugen, durch den Festplattenmanager, einer Anweisung und Verkapseln der Anweisung in ein erstes MCTP-Paket, wobei die Anweisung zum Spezifizieren einer Festplattenausführungsaktion verwendet wird; und
Senden, durch den Festplattenmanager, des ersten MCTP-Pakets an eine Festplattensteuerung, sodass die Festplattensteuerung die Anweisung an eine Festplatte weiterleitet.

2. Verfahren nach Anspruch 1, wobei das Verfahren ferner Folgendes umfasst:
Empfangen, durch den Festplattenmanager, eines zweiten MCTP-Pakets, das durch die Festplattensteuerung gesendet wird, wobei das zweite MCTP-Paket ein durch die Festplatte durch Ausführen der Aktion gemäß der Anweisungen erhaltenes Ausführungsergebnis führt; und
Herausparsen, durch den Festplattenmanager, des Ausführungsergebnisses aus dem zweiten MCTP-Paket.

3. Festplattenmanager (500), wobei der Festplattenmanager (500) Folgendes umfasst:
eine Kommunikationseinheit (502), ausgelegt zum Herstellen einer Kommunikationsverbindung mit einer Festplattensteuerung basierend auf "Management Component Transport Protocol", MCTP, durch Verwenden eines "Platform Controller Hub", PCH, wobei eine Computervorrichtung einen CPU-Satz und den PCH umfasst, der CPU-Satz mindestens eine CPU, die ein Betriebssystem, OS, ausführt, umfasst, der CPU-Satz der Festplattenmanager ist und die Festplattensteuerung auf dem PCH bereitgestellt ist, wobei die Festplattensteuerung eine SAS/SATA-Steuerung ist;
eine Verkapselungseinheit (501), ausgelegt zum Erzeugen einer Anweisung und
Verkapseln der Anweisung in ein erstes MCTP-Paket, wobei die Anweisung zum Spezifizieren einer Festplattenausführungsaktion verwendet wird;
die Kommunikationseinheit (502), ausgelegt zum Senden des ersten MCTP-Pakets an eine Festplattensteuerung, sodass die Festplattensteuerung die Anweisung an eine Festplatte weiterleitet.

4. Festplattenmanager nach Anspruch 3, wobei der Festplattenmanager Folgendes umfasst:
die Kommunikationseinheit (502) ist ausgelegt zum Empfangen eines zweiten MCTP-Pakets, das durch die Festplattensteuerung gesendet wird, wobei das zweite MCTP-Paket ein durch die Festplatte durch Ausführen der Aktion gemäß der Anweisungen erhaltenes Ausführungsergebnis führt; und
eine Parsingeinheit (503), ausgelegt zum Herausparsen des Ausführungsergebnisses aus dem zweiten MCTP-Paket.

## Revendications

1. Procédé de fonctionnement de disque dur, le procédé comprenant :
l'établissement, par un gestionnaire de disque dur, d'une connexion de communication à un contrôleur de disque dur sur la base de protocole de transport de composant de gestion, MCTP, en utilisant un concentrateur contrôleur de plate-forme, PCH, dans lequel un dispositif informatique comprend un ensemble de CPU et le PCH, l'ensemble de CPU comprend au moins une CPU exécutant un système d'exploitation, OS,
l'ensemble de CPU est le gestionnaire de disque dur, et le contrôleur de disque dur est déployé sur le PCH, dans lequel le contrôleur de disque dur est un contrôleur SAS/SATA ;
la génération, par le gestionnaire de disque dur, d'une instruction, et l'encapsulation de l'instruction dans un premier paquet MCTP, dans lequel l'instruction est utilisée pour spécifier une action d'exécution de disque dur ; et
l'envoi, par le gestionnaire de disque dur, du premier paquet MCTP à un contrôleur de disque dur, pour que le contrôleur de disque dur transfère l'instruction à un disque dur.

2. Procédé selon la revendication 1, le procédé comprenant en outre :
la réception, par le gestionnaire de disque dur, d'un second paquet MCTP envoyé par le contrôleur de disque dur, dans lequel le second paquet MCTP porte un résultat d'exécution obtenu par le disque dur en exécutant l'action selon l'instruction ; et
l'extraction par analyse syntaxique, par le gestionnaire de disque dur, du résultat d'exécution à partir du second paquet MCTP.

3. Gestionnaire de disque dur (500), le gestionnaire de disque dur (500) comprenant :
une unité de communication (502), configurée pour établir une connexion de communication à un contrôleur de disque dur sur la base d'un protocole de transport de composant de gestion, MCTP, en utilisant un concentrateur contrôleur de plate-forme, PCH, dans lequel un dispositif informatique comprend un ensemble de CPU et
le PCH, l'ensemble de CPU comprend au moins une CPU exécutant un système d'exploitation, OS, l'ensemble de CPU est le gestionnaire de disque dur, et le contrôleur de disque dur est déployé sur le PCH, dans lequel le contrôleur de disque dur est un contrôleur SAS/SATA ;
une unité d'encapsulation (501), configurée pour générer une instruction et encapsuler l'instruction dans un premier paquet MCTP, dans lequel l'instruction est utilisée pour spécifier une action d'exécution de disque dur ;
l'unité de communication (502), configurée pour envoyer le premier paquet MCTP à un contrôleur de disque dur, pour que le contrôleur de disque dur transfère l'instruction à un disque dur.

4. Gestionnaire de disque dur selon la revendication 3, le gestionnaire de disque dur comprenant :
l'unité de communication (502) est configurée pour recevoir un second paquet MCTP envoyé par le contrôleur de disque dur, dans lequel le second paquet MCTP porte un résultat d'exécution obtenu par le disque dur en exécutant l'action selon l'instruction ;
une unité d'analyse syntaxique (503), configurée pour extraire par analyse syntaxique le résultat d'exécution à partir du second paquet MCTP.
